# EUROPÄISCHE PATENTANMELDUNG

(11) **EP 1 060 826 A1**
(43) Veröffentlichungstag der Anmeldung: **20.12.2000**
(21) Anmeldenummer: 00112556.6
(22) Anmeldetag: 14.06.2000
(51) Int. Cl.: B23K 20/12, F16B 37/06, B23K 35/02

(54) **Formgeprägtes Schweisselement**

(30) Priorität: 16.06.1999 DE 19927369
(71) Anmelder: Franz, Udo, Prof. Dr., 39124 Magdeburg (DE)
(72) Erfinder: Franz, Udo, Prof. Dr., 39124 Magdeburg (DE)
(74) Vertreter: Leinung, Günter

(57) **Zusammenfassung**

Die Erfindung bezieht sich auf ein formgeprägtes Schweißelement unterschiedlicher Ausführungen, welches sich mittels Reibschweißung an Werkstücken/Bauteilen anschweißbar ist.

Gemäß der vorliegenden Erfindung besitzt das anzuschweißende Element an seiner dem Werkstück zugewandten Stirnseite eine besondere Profilierung und Querschnittsgestaltung und wird mit dieser profilierten Querschnittsgestaltung auf das Werkstück aufgelegt und in Rotation versetzt. Die entstehende Reibwärme wird durch die ausgebildeten Stirnflächen konzentriert, so daß durch die Stirnflächengestaltung positiv auf die Bildung der Bindezonen eingewirkt wird.

## Beschreibung

Die Erfindung bezieht sich auf ein formgeprägtes Schweißelement unterschiedlicher Ausführungen, welches mittels Reibschweißung an Werkstücken/Bauteilen anschweißbar ist.

Derartige Schweißelemente, bekannt auch als anzuschweißende Kleinteile sind entsprechend ihres Anwendungs- bzw. Verwendungszweckes in ihrer Gestalt ausgebildet und besitzen im Bereich der Schweißung besondere Flächenausbildungen, die sich positiv auf den Schweiß- und Bindeprozeß auswirken sollen.

Derartige Schweißelemente werden gemäß des Standes der Technik nach verschiedenen Verfahren und Methoden verschweißt.

So werden Bolzen/Schweißelemente mittels Hubzündung mit dem Werkstück verschweißt. Hierzu wird der Bolzen/das Schweißelement auf das Werkstück aufgesetzt. Durch Auslösen des Schweißvorganges hebt sich der Bolzen/das Schweißelement vom Grundmaterial ab bzw. wird vom Grundmaterial abgehoben und zieht einen Lichtbogen, der das Bolzenende und das Grundmaterial aufschmilzt und nach Ablauf der Zündungs- und Schmelzzeit wird der Bolzen/das Schweißelement in das Schmelzbad des Grundmaterials geführt. Nach dem Erstarren der Schmelze sind beide Teile geschweißt. Zum Stand der Technik gehört weiterhin das Verfahren des Bolzenschweißens mit Spitzenzündung.
Bei diesem Verfahren erfolgt das Verschweißen des Bolzens durch die direkte Entladung einer Kondensatorbatterie mit hoher Kapazität. Der durch die Entladung der Kondensatoren beginnende Stromfluß konzentriert sich auf die Zündspitze, die dadurch örtlich verdampft. Der entstehende Lichtbogen schmilzt in der Folge die gesamte Stirnfläche und die dem Bolzen gegenüberliegende Zone des Grundmaterials bzw. des Werkstückes auf. Die Vorwärtsbewegung des Bolzens bei diesem Vorgang erfolgt bis zum Aufschlag auf das Werkstück und der Lichtbogen erlischt. Der Bolzen und das Werkstück vereinigen sich im gemeinsamen Schmelzbad durch Kristallisation zu einer festen Schweißverbindung.

Ferner ist aus dem Stand der Technik bekannt, derartige Schweißelemente mittels Reibschweißung zu verbinden.
Hier wird das Schweißelement dem Werkstück zugeführt, dabei in Rotation oder Schwingung versetzt und unter anhaltender oder verstärkter Druckwirkung auf das Werkstück gestaucht.
Die infolge Reibung auftretende Wärme bewirkt in der gemeinsamen Berührungsfläche eine thermische Aktivierung, welche zur Bindung beider Teile genutzt wird. Dies erfolgt in bekannter Weise durch Annäherung beider aktivierter Kontaktflächen auf Gitterabstand.

Die Ausbildung der Stirnflächen der Schweißelemente ist insbesondere unter Anwendung der Reibschweißung für Kleinteile und unter der Forderung geringer Verformung und Wulstbildung von Bedeutung, um qualitätsgerechte Schweißungen erzielen zu können, so daß es Aufgabe der vorliegenden Erfindung ist, formgeprägte Schweißelemente mit besonders gestalteten Stirnflächen zu entwickeln, die durch ihre geometrische Gestalt positiv auf den Reibschweißprozeß und die erzielte Qualität der Verbindung Einfluß nehmen.

Erfindungsgemäß wird die Aufgabe mit den Merkmalen des Anspruchs 1 gelöst.

Vorteilhafte Ausführungen und besondere Ausgestaltungen sind Gegenstand der Unteransprüche.

Dadurch, daß das anzuschweißende Element an seiner, dem Werkstück zugewandten Stirnseite eine besondere Profilierung und Querschnittsgestaltung aufweist, kann das anzuschweißende Element auf das Werkstück aufgelegt und in Rotation versetzt werden, wodurch die entstehende Reibwärme in den ausgebildeten Stirnflächen konzentriert wird, somit positiv auf die Bildung der Bindezonen eingewirkt wird.

Das vorgestellte Schweißelement, welches in verschiedensten Ausführungsformen hergestellt und verwendet werden kann, ist insbesondere dadurch gekennzeichnet, daß das Schweißelement einen im Vergleich zum Anschlußquerschnitt veränderten rotationssymmetrischen Reibansatz mit rechteckigem, teilelliptischen, trapez- oder teilkreisförmigen Querschnitt bzw. eine Kombination aus diesen Formen aufweist.

Ferner gehört zur Erfindung, daß die so gestalteten Reibeinsätze im Prozeßverlauf die Reib- und Bindefläche verändern, im weitesten Sinne vergrößern, wodurch die Voraussetzungen für die Bindung entstehen und eine den Anforderungen entsprechende Verbindung erzielt wird.

Ein weiteres Merkmal der Erfindung liegt in der Verwendung eines Zusatzelementes in Form von vorzugsweise ausgebildeten Ringen, die unmittelbar dem zu schweißenden Schweißelement zugeordnet werden, wodurch eine Querverformung der Bindezone bzw. der Schweißverbindung weitestgehend verhindert wird.

Mit folgendem Ausführungsbeispiel soll die Erfindung näher erläutert werden.

Die dazugehörige Zeichnung zeigt in den einzelnen Darstellungen unterschiedlich formgeprägte Schweißelemente, deren Reibeinsätze verschiedene Querschnittsformen besitzen.

Bei den dargestellten Schweißelementen 1 in den einzelnen Figuren a bis e handelt es sich um Schweißmuttern und Schweißhülsen, die entweder mit einem Gewinde 4 oder nur mit einer durchgehenden Innenbohrung 5 oder einer Kombination aus beiden versehen sind.

Wesentlich unterscheiden sich die dargestellten Schweißelemente 1 durch ihre besondere Gestaltung und Ausbildung der Stirnseiten, der zum Werkstück gerichteten Flächen. Die geometrische Ausbildung wird hier als Reibansatz 2 gekennzeichnet, die unmittelbare Berühungsfläche als Reibfläche 3.
Bei dem Schweißelement 1 nach Abbildung a handelt es sich um ein Schweißelement, deren Reibfläche 3 begrenzt wird durch den äußeren Umfang bzw. durch die äußeren Begrenzungslinien des Schweißelementes 1 und dem äußeren Umfang bzw. Begrenzungslinien des Zwischenraumes 12. Die Stirnseite der Reibfläche 3 ist hierbei eben ausgeführt, der Reibansatz besitzt bei diesem Schweißelement einen rechteckigen Querschnitt, wobei durch größenmäßige Veränderung des Zwischenraumes 12 auch Reibansätze 2 mit quadratischem Querschnitt erzielt werden können.
Bei dem Schweißelement 1 nach der Darstellung b handelt es sich um eine Schweißhülse mit einer Innenbohrung 5, deren Reibansatz 2 unmittelbar umfänglich um die Innenbohrung 5 ausgebildet ist. Der Reibansatz 2 wird dabei umfänglich durch Freidrehungen oder Aussparungen und nach innen gerichtet durch die Bohrungswandungen begrenzt.

Diese Ausbildung des Reibansatzes 2 mit seiner ebenen Reibfläche 3 gewährleistet, daß die gemeinsame Bindefläche vom Schweißelement 1 zum Werkstück auch vergrößert werden kann.

Weitere Schweißmuttern sind in den Darstellungen d und e gezeigt, die einen trapezförmigen Reibansatz 2 bzw. eine Kombination aus einem trapezförmigen bzw. abgerundeten Reibansatz 2 besitzen.
Der kombinierte Reibansatz 2 nach Darstellung d wird herausgebildet durch die Schräge 7 des Zwischenraumes 12 und dem Radius 8, der von der Reibfläche 3 zum Außendurchmesser bzw. zur äußeren Kante des Schweißelementes 1 vorgesehen ist bzw. verläuft.
Der weitestgehend trapezförmig ausgebildete Reibansatz 2, in Darstellung e gezeigt, wird herausgebildet durch die am Umfang des Schweißelementes vorgesehenen Schrägen 7, die die Reibfläche 3 nach außen begrenzen und eine verstärke blechseitige Aktivierung besonders beim Schweißen von Metallverbunden zu erlangen.

Um zu verhindern, daß der jeweilige Reibansatz 2 eines Schweißelementes 1 sich quer verformt, besteht die Möglichkeit, dem Reibansatz 2 umfänglich ein Zusatzelement 6 zuzuordnen, welches beispielsweise als Ring ausgebildet und umfänglich dem Reibansatz 2 zugeordnet ist. Verständlicherweise muß dieses Zusatzelement 6 der Form des Reibansatzes 2 angepaßt sein, um wirksam werden zu können. Gleichfalls ist vorteilhaft, dieses Zusatzelement 6 aus einem Werkstoff höherer Qualität im Vergleich zum jeweiligen Schweißelement 1 herzustellen.
Das Zusatzelement 6 bewirkt die Konzentrierung der Ausbildung der jeweiligen Reibfläche 3, verringert den Druckgradienten über die Reibfläche und verstärkt die thermische Aktivierung des Grundmaterials, so daß die erzeugte Energie unmittelbar in der Bindezone wirkt und für den Bindeprozeß genutzt wird.

Die Variierbarkeit derartiger Schweißelemente für das Reibschweißen verdeutlichen die Darstellungen f, g, h, i und j, die mit besonders gestalteten Reibansätzen 2 und Reibflächen 3 ausgebildet sind.

Das Schweißelement 1 nach Darstellung f stellt im weitesten Sinne eine Schweißmutter mit einem zylindrischen Ansatz 10 dar, welcher funktionsbedingt aber auch verfahrensbedingt ausgebildet ist, um einerseits in seiner variablen Innenbohrung 5 oder Gewinde 4 zusätzliche Elemente aufnehmen zu können und anderseits der zylindrische Ansatz 10 gleichfalls als Führung während des Reibschweißens dient, da dieser zylindrische Ansatz 10 in eine entsprechende Bohrung des Werkstückes 1 eingreift. Der Querschnitt des Reibansatzes 2 ist im weitesten Sinne rechteckig ausgebildet und wird begrenzt durch den Umfang des Schweißelementes 1 und die Aussparung 9.

Das in der Darstellung g gezeigte Schweißelement ist als Stehbolzen 11 ausgebildet, dessen Stehbolzenkopf mit der gewünschten Profilierung ausgebildet ist. Hier besitzt der Reibansatz 2 eine konvexe Form, die sowohl symmetrisch als auch unsymmetrisch ausgebildet sein kann. Die Ausbildung des Reibansatzes 2 in der dargestellten und beschriebenen Form birgt insbesondere den Vorteil in sich, daß der Stehbolzen 11 mit einer kleinen Reibfläche 3 zum Werkstück aufgesetzt wird, hier fast eine punktförmige Auflage gegeben ist, somit zu Beginn des Reibschweißvorganges geringe Reibwiderstände anliegen, somit gleichfalls zu Beginn des Reibschweißvorganges günstige Bedingungen vorherrschen. Außerdem kann die Tragfähigkeit der Verbindung dem Bolzenquerschnitt durch Veränderung der Geometrie des Reibansatzes angepaßt bzw. erhöht werden.

Die Schweißelemente 1 nach den Darstellungen h und i sind als Preßteile hergestellt, deren Reibansätze einmal durch Aufweiten, wie in h gezeigt, oder durch Anstauchen, wie in i gezeigt, herausgebildet werden.
Die an den äußeren und inneren Kanten des Reibansatzes 2 vorgesehenen Radien 8/7 bilden die Querschnittsform des Reibansatzes 2 heraus und bestimmen diesen und damit die anfängliche Reibfläche.

Bei dem Schweißelement 1 nach der Darstellung j handelt es sich im weitesten Sinne um ein Rohrstück, dessen Reibansatz 2 sich unmittelbar aus den geometrischen Abmaßen des Rohres ergibt. Derart ausgebildete Schweißelemente begründen neben ihrer einfachen Herstellung und auch weitestgehenden einfach herzustellenden Verbindung zum Werkstück den weiteren Vorteil, daß das Rohrstück in einem gesonderten Arbeitsgang kalt verformt werden kann, wodurch eine funktionsbedingte Formgebung erreicht wird, so daß an dieser Ausformung weitere Elemente befestigt werden können.

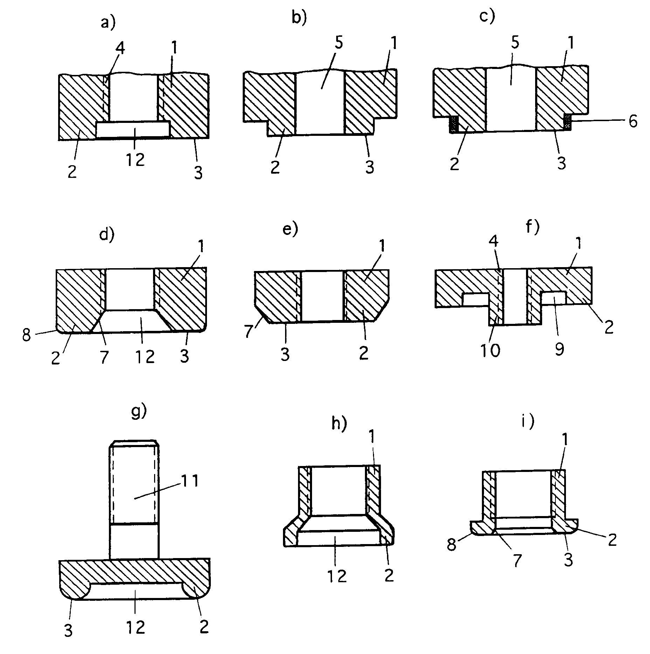

## Patentansprüche

1. Formgeprägtes Schweißelement unterschiedlicher Ausführungen in Form von Hülsen, Stiften, Bolzen, Muttern, Schrauben und anderen Befestigungs- bzw. Verbindungs- und Anschlagelementen, die mittels Reibschweißung an Werkstück-/Bauteilen anschweißbar sind, dadurch gekennzeichnet, daß
- das Schweißelement (1) einen im Vergleich zum Anschlußquerschnitt des Werkstückes veränderten rotationssymmetrischen Reibansatz (2) mit rechteckigem, teilellyptischen, trapez- oder teilkreisförmigen Querschnitt besitzt,
- die Anordnung des Reibansatzes (2) am Schweißelement (1) dem Durchmesser des Schweißelementes angepaßt ist,
- der Reibansatz (2) in seiner Geometrie und örtlichen Lage werkstoff- und beanspruchungsabhängig sowie prozeßangepaßt ausgebildet ist,
- im Prozeßverlauf des Reibschweißens die Reib- und Bindeflächen sich verändernd herausbilden,
- die Querschnittsform und Lage des Reibansatzes (2) die äußere Wulstausbildung bei ausreichender Verformung der Bindezone minimiert,
- dem Reibansatz (2) umfänglich eine Querverformung verhinderndes, die thermische Aktivierung unterstützendes Zusatzelement (6) zugeordnet ist und
- die Schweißelemente (1), in Abhängigkeit ihrer geometrischen Gestalt eine funktionsbedingte Formgebung erhalten, denen zusätzliche Elemente formschlüssig zugeordnet werden können.

2. Formgeprägtes Schweißelement nach Anspruch 1, dadurch gekennzeichnet, daß
die Reibansätze (2) Querschnittsformen besitzen, die aus einer Kombination aus rechteckigen, teilelliptischen, trapez- oder teilkreisförmigen Querschnitten herausgebildet sind.

3. Formgeprägtes Schweißelement nach einem der Ansprüche 1 und 2, dadurch gekennzeichnet, daß
die Anordnung der Reibansätze (2) auf den Stirnflächen der Schweißelemente (1) so angeordnet sind, daß sie über den maximalen Durchmesser des Schweißelementes (1) hinausgehen, sich somit die Reib- und Bindeflächen vorzugsweise vergrößern.
